# EUROPÄISCHE PATENTANMELDUNG

(11) **EP 0 636 787 A1**
(43) Veröffentlichungstag der Anmeldung: **01.02.1995**
(21) Anmeldenummer: 94111431.6
(22) Anmeldetag: 22.07.1994
(51) Int. Cl.: F03B 3/10, F04D 3/00, F03B 13/10

(54) **Unidirektionale Pumpturbine**

(30) Priorität: 28.07.1993 DE 4325231
(71) Anmelder: KSB Aktiengesellschaft, D-67227 Frankenthal (DE)
(72) Erfinder: Hergt, Peter, D-67061 Ludwigshafen (DE); Jäger, Christoph, D-67229 Gerolsheim (DE); Nicklas, Alexander, D-67246 Dirmstein (DE); Springer, Peer, D-67141 Neuhofen (DE); Wolff, Werner, D-90530 Wendelstein (DE)

(57) **Zusammenfassung**

Anwendungsgebiet der Erfindung sind Anlagen, in denen die Flüssigkeit im einen Fall gegen einen höheren Druck gefördert wird und im anderen Fall in gleicher Richtung mit einem Druckgefälle fließt.

Hierfür nutzt die Erfindung ein Aggregat, bestehend aus einer Kreiselradmaschine, welche wechselweise als Pumpe oder als Turbine betrieben wird, und einer oder mehreren Maschinen, welche dem Antrieb der Kreiselradmaschine im Pumpbetrieb und der Aufnahme der abgegebenen Leistung der Kreiselradmaschine im Turbinenbetrieb dienen.

Von den grundsätzlich bekannten Aggregaten dieser Art hebt sich das erfindungsgemäße Aggregat dadurch ab, daß der Pump- und der Turbinenbetrieb der Kreiselradmaschine bei gleicher Durchströmrichtung (14) erfolgen.

## Beschreibung

Die Erfindung betrifft ein Aggregat, bestehend aus einer Kreiselradmaschine, welche wechselweise als Pumpe oder als Turbine betrieben wird, und einer oder mehreren Maschinen, welche dem Antrieb der Kreiselradmaschine im Pumpbetrieb und der Aufnahme der abgegebenen Leistung der Kreiselradmaschine im Turbinenbetrieb dienen.

Bekannt sind Kreiselradmaschinen, die sowohl als Pumpe als auch als Turbine einzusetzen sind (KSB Kreiselpumpenlexikon, 3. Auflage, 1989, Seiten 312 und 313). Werden Kreiselpumpen als Turbinen eingesetzt, so kann dies ohne eine Änderung des Laufrades oder des Gehäuses geschehen. Im Turbinenbetrieb wird die Kreiselpumpe rückwärts durchströmt, womit sich auch die Drehrichtung der Welle umkehrt. Dabei kann eine die Kreiselpumpe antreibende Elektromaschine im Turbinenbetrieb als Generator genutzt werden. Ein solchermaßen ausgestattetes Aggregat kann beispielsweise in Pumpspeicherwerken zum Einsatz kommen.

Das Anwendungsgebiet dieser Erfindung liegt in einem anderen Bereich, in dem sich Aggregate der geschilderten Art nicht einsetzen lassen. Es handelt sich hier um Anlagen, in denen die Flüssigkeit im einen Fall gegen einen höheren Druck gefördert wird und im anderen Fall in gleicher Richtung mit einem Druckgefälle fließt. Beispiele hierfür sind Kläranlagen-Abläufe, Anlagen für Be- und Entwässerung sowie Anlagen in der Prozeßtechnik. Bisher werden zur Gewährleistung der Funktion solcher Anlagen Drosselorgane oder Überläufe eingesetzt, um zeitweise auftretenden überschüssigen Druck abzubauen, während parallel dazu Pumpen zur Überwindung zeitweise auftretenden Gegendruckes angeordnet sind. Es bleibt also einerseits die abzubauende Energie ungenutzt, während andererseits Energie aufzuwenden ist. Der Umstand, daß es hierzu jeweils einer umfangreichen Ausrüstung bedarf, läßt den Wunsch nach besserer Nutzung des zu treibenden Aufwandes entstehen.

Der Erfindung liegt die Aufgabe zugrunde, Nutzen und Aufwand einer für die geschilderten Funktionen einzusetzenden Einrichtung in ein günstigeres Verhältnis zu bringen, wobei vor allem die bei einem Druckabbau freiwerdende Energie genutzt werden soll.

Die gestellte Aufgabe wird erfindungsgemäß durch ein Aggregat der eingangs genannten Art gelöst, bei dem aber im Gegensatz zu den bekannten Aggregaten dieser Art der Pump- und der Turbinenbetrieb der Kreiselradmaschine bei gleicher Durchströmrichtung erfolgt.

Neben dem Nutzen der Energieerzeugung ergibt sich eine Einsparung an Rohrleitungen, Armaturen und Bauwerk, wobei lediglich anstelle der ohnehin notwendigen Pumpenausrüstung die erfindungsgemäße Pumpturbine mit gleicher Durchströmrichtung eingebaut wird.

Zur Anpassung an die jeweilige Betriebsart kann das erfindungsgemäße Aggregat neben festen Beschaufelungen für das Laufrad sowie ein Vor- und/oder Nachleitrad auch mit verstellbaren Schaufeln an den genannten Teilen ausgestattet werden. Die Ansprüche 2 bis 7 nennen verschiedene Ausgestaltungen, die einzeln, teilweise aber auch gemeinsam verwirklicht werden können.

Zweckmäßigerweise wird die Kreiselradmaschine mit einer Elektromaschine verbunden, die im Pumpbetrieb als Motor und im Turbinenbetrieb als Generator wirkt. Eine weitere Erhöhung der Effizienz und eine Verbesserung des Regelverhaltens, vor allem im Turbinenbetrieb, kann durch einen Frequenzumrichter erzielt werden.

Die Drehrichtung der Kreiselradmaschine kann in beiden Betriebsarten gleich sein, sie kann aber auch mit der Betriebsart wechseln.

Es wird im übrigen vorgeschlagen, die Kreiselradmaschine und/oder die Elektromaschine auf eine der beiden Betriebsarten auszulegen und mögliche Einbußen in der anderen Betriebsart in Kauf zu nehmen. Dies empfiehlt sich vor allem für solche Aggregate, die vorwiegend in einer Betriebsart genutzt werden.

Für einen selbsttätigen Ablauf wird ein Betriebsverfahren empfohlen, bei dem die Betriebsart aufgrund des vor dem Einlaß und hinter dem Auslaß der Kreiselradmaschine herrschenden Druckes bestimmt wird, wobei bei Abfallen des Druckes unter einen vorgegebenen Wert die Kreiselradmaschine als Turbine und bei Anstieg des Druckes über einen vorgegebenen Wert die Kreiselradmaschine als Pumpe betrieben wird.

Das erfindungsgemäße Aggregat läßt sich in unterschiedlichen Anlagen verwenden. Die Ansprüche 13 bis 15 nennen mehrere Beispiele.

Anhand mehrerer Ausführungsbeispiele wird die Erfindung näher erläutert.

Die Zeichnung zeigt in
- Fig. 1: eine schematische Darstellung einer mit einem erfindungsgemäßen Aggregat ausgestatteten Anlage, in
- Fig. 2: einen Halbschnitt einer mit einem verstellbaren Leitapparat ausgerüsteten axialen Kreiselradmaschine, in
- Fig. 3: eine Draufsicht auf die Beschaufelung der im Pumpbetrieb befindlichen Kreiselradmaschine der Fig. 2, in
- Fig. 4: eine der Fig. 3 entsprechende Draufsicht, wobei sich die Kreiselradmaschine im Turbinenbetrieb befindet, in
- Fig. 5: einen Halbschnitt einer mit verstellbaren Laufradschaufeln ausgerüsteten axialen Kreiselradmaschine, in
- Fig. 6: eine Draufsicht auf die Beschaufelung der in Fig. 5 dargestellten, im Pumpbetrieb befindlichen Kreiselradmaschine, und in
- Fig. 7: eine der Fig. 6 entsprechende Draufsicht für den Turbinenbetrieb.

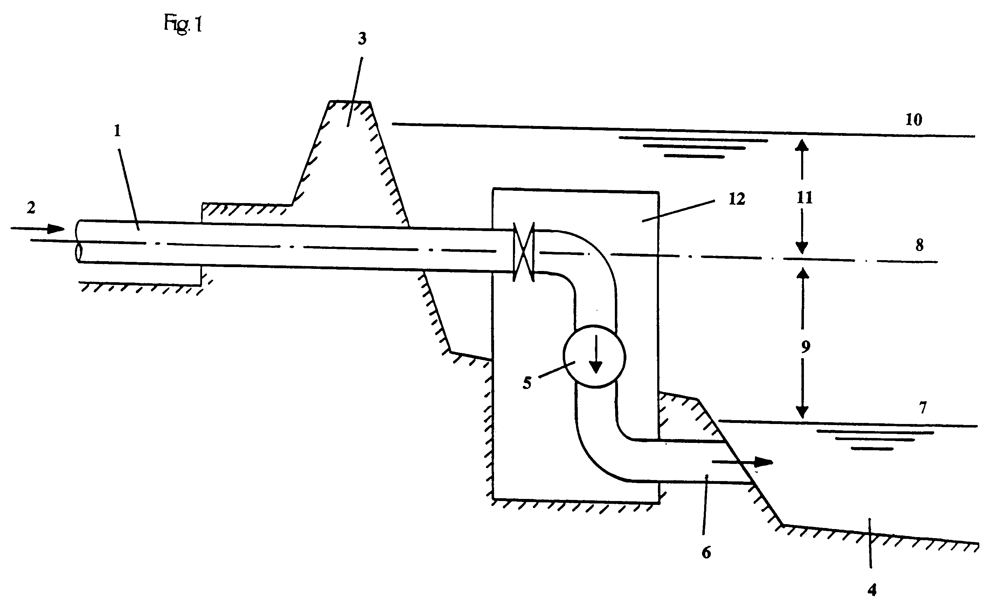

Der in der Fig. 1 dargestellten Anlage wird aus einem hier nicht gezeigten Anlagenteil Wasser zugeführt. Dies wird durch den der zuführenden Rohrleitung 1 vorgeschalteten Pfeil 2 symbolisiert. Das Wasser wird in einen mit einem Deich 3 gegen Hochwasser eingedämmten Vorfluter 4 eingeleitet. Das Wasser durchströmt dabei ein erfindungsgemäßes Aggregat 5, bestehend aus einer Kreiselradmaschine und einer mit dieser verbundenen Elektromaschine. Der in Strömungsrichtung hinter dem Aggregat 5 gelegene Auslaß 6 liegt unter dem Niedrigwasserspiegel 7 des Vorfluters 4.

Bei Niedrigwasser im Vorfluter 4 wird die Höhendifferenz zwischen dem Auslaufwasserspiegel 8 und dem Niedrigwasserspiegel 7 als Gefälle 9 für das im Turbinenbetrieb befindliche Aggregat 5 genutzt, während bei Hochwasser die Differenz zwischen dem Hochwasserspiegel 10 und dem Auslaufwasserspiegel 8 als Förderhöhe 11 durch das jetzt im Pumpbetrieb befindliche Aggregat 5 überwunden werden muß.

Geeigneterweise ist das Aggregat 5 in einem Bauwerk 12 untergebracht, das sich zwischen dem Deich 3 und dem Vorfluter 4 befindet.

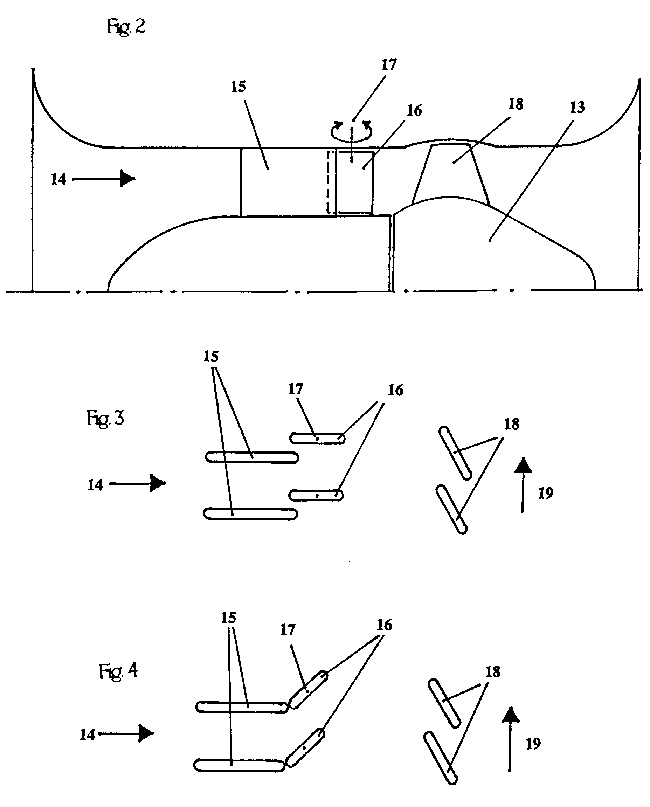

Die in der Fig. 2 dargestellte, mit einem Laufrad 13 ausgestattete Kreiselradmaschine besitzt einen mit zwei Schaufelreihen versehenen Vorleitapparat. Die in Richtung der durch einen Pfeil 14 angedeuteten Strömung erste Schaufelreihe wird durch starre Schaufeln 15 gebildet. Die zweite Schaufelreihe verfügt über bewegliche Schaufeln 16, welche um eine Achse 17 zu verschwenken sind. Die Schaufeln 18 des in Richtung des Pfeiles 19 drehenden Laufrades 13 wiederum sind starr angeordnet.

Wie die Fig. 3 zeigt, sind die Schaufeln 16 während des Pumpbetriebes parallel zu der Strömung und zu den Schaufeln 15 ausgerichtet, so daß keine Umlenkung der Strömung erfolgt. - Für den Pumpbetrieb ist aber ebenso eine Verdrehung der Schaufeln 16 in der Weise möglich, daß der Strömung ein der Laufraddrehung gleicher oder entgegengesetzter Drehsinn verliehen wird, wodurch die Pumpcharakteristik vorteilhaft beeinflußt werden kann.

Die in der Fig. 4 dargestellte Position der an die starren Schaufeln 15 anschließenden verschwenkten Schaufeln 16 bewirkt dagegen eine für den Turbinenbetrieb vorteilhafte Umlenkung der Strömung, die nun in optimaler Weise auf die Schaufeln 18 des Laufrades 13 trifft.

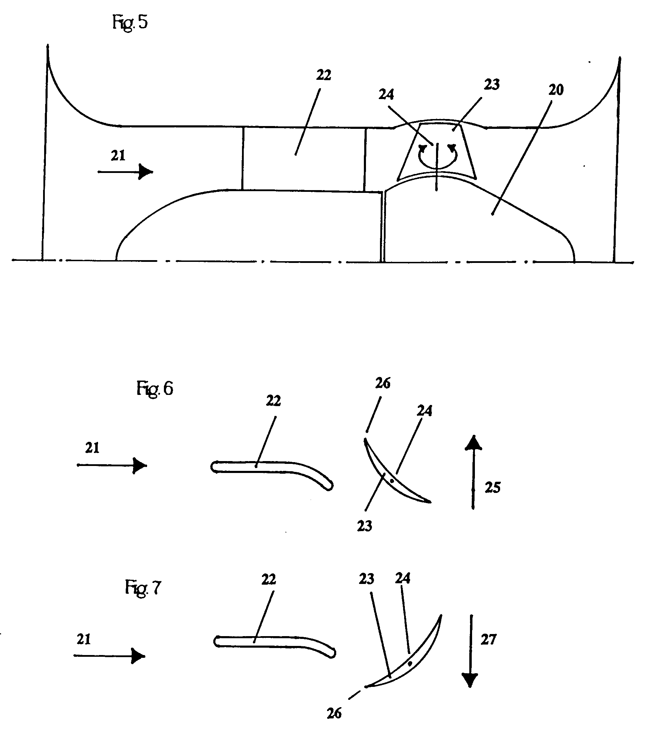

Die Kreiselradmaschine der Fig. 5 bis 7 besitzt ein Laufrad 20 und einen in Richtung der Strömung 21 vor dem Laufrad 20 angeordneten starren Leitapparat 22, der die Strömung 21 mit gleichbleibender Umfangsrichtung umlenkt.

Die Schaufeln 23 des Laufrades 20 sind jeweils um eine Achse 24 schwenkbar. Wie die Fig. 6 zeigt, wird im Pumpbetrieb die Drehrichtung 25 des Laufrades 20 so gewählt, daß sie der durch den Leitapparat 22 hervorgerufenen Umlenkung der Strömung 21 entgegenläuft, während die Schaufeln 23 des Laufrades 20 so verschwenkt werden, daß deren Eintrittskanten 26 in geeigneter Weise angeströmt werden.

Die Fig. 7 zeigt Schaufelstellung und Drehrichtung des Laufrades 20 im Turbinenbetrieb. Die gegenüber dem Pumpbetrieb umgekehrte Drehrichtung 27 des Laufrades 20 hat den gleichen Drehsinn wie die durch den Leitapparat 22 umgelenkte Strömung 21. Auch in dieser Betriebsart sind die Schaufeln 23 so verschwenkt, daß die Strömung 21 in geeigneter Weise auf die Eintrittskanten 26 trifft.

## Patentansprüche

1. Aggregat, bestehend aus einer Kreiselradmaschine, welche wechselweise als Pumpe oder als Turbine betrieben wird, und einer oder mehreren Maschinen, welche dem Antrieb der Kreiselradmaschine im Pumpbetrieb und der Aufnahme der abgegebenen Leistung der Kreiselradmaschine im Turbinenbetrieb dienen, **dadurch gekennzeichnet,** daß der Pump- und der Turbinenbetrieb der Kreiselradmaschine bei gleicher Durchströmrichtung erfolgen.

2. Aggregat nach Anspruch 1, gekennzeichnet durch einen der Kreiselradmaschine zugeordneten Leitapparat mit verstellbaren Schaufeln, durch welchen eine Anpassung an die jeweilige Betriebsart erfolgt.

3. Aggregat nach Anspruch 2, gekennzeichnet durch einen Vorleitapparat.

4. Aggregat nach Anspruch 3, dessen Kreiselradmaschine als Axialmaschine ausgebildet ist, gekennzeichnet durch einen mit zwei Schaufelreihen ausgestatteten Vorleitapparat, dessen, in Strömungsrichtung gesehen, erste Schaufelreihe starre, parallel zur Strömung verlaufende Schaufeln (15) und dessen zweite Schaufelreihe verstellbare Schaufeln (16) besitzt, wobei die verstellbaren Schaufeln (16) für den Pumpbetrieb in eine parallel zur Strömung verlaufende Stellung zu bringen sind, während sie für den Turbinenbetrieb in eine Stellung zu bringen sind, in welcher ihre Vorderkanten an die Hinterkanten der starren Schaufeln (15) anschließen und ihr Verlauf eine die Strömung umlenkende Richtung besitzt.

5. Aggregat nach Anspruch 3, dessen Kreiselradmaschine als Axialmaschine ausgebildet ist, gekennzeichnet durch einen mit geteilten Schaufeln ausgestatteten Vorleitapparat, wobei der, in Strömungsrichtung gesehen, vordere Teil einer Schaufel starr ist, während der hintere Teil einer Schaufel um eine in der Verbindung der beiden Schaufelteile verlaufende Achse schwenkbar ist, so daß die gesamte Schaufel für den Pumpbetrieb in eine parallel zur Strömung verlaufende Stellung zu bringen ist, während für den Turbinenbetrieb der hintere Teil der Schaufel in eine die Strömung umlenkende Stellung zu bringen ist.

6. Aggregat nach Anspruch 2, gekennzeichnet durch einen Nachleitapparat.

7. Aggregat nach Anspruch 1, gekennzeichnet durch ein Laufrad (20) mit verstellbaren Schaufeln (23), mittels derer eine Anpassung an die jeweilige Betriebsart vorgenommen wird.

8. Aggregat nach Anspruch 1, gekennzeichnet durch eine mit der Kreiselradmaschine verbundene Elektromaschine, die im Pumpbetrieb als Motor und im Turbinenbetrieb als Generator wirkt.

9. Aggregat nach Anspruch 8, dadurch gekennzeichnet, daß die Elektromaschine mit einem Frequenzumrichter ausgestattet ist.

10. Aggregat nach Anspruch 1, dadurch gekennzeichnet, daß die Drehrichtung der Kreiselradmaschine mit der Betriebsart wechselt.

11. Aggregat nach Anspruch 1, dadurch gekennzeichnet, daß die Kreiselradmaschine und/oder die Elektromaschine auf eine der beiden Betriebsarten ausgelegt ist, wobei mögliche Einbußen in der anderen Betriebsart in Kauf genommen werden.

12. Betriebsverfahren für das Aggregat des Anspruches 1, dadurch gekennzeichnet, daß die Betriebsart aufgrund des vor dem Einlaß und nach dem Auslaß der Kreiselradmaschine herrschenden Druckes bestimmt wird.

13. Aggregat nach Anspruch 1, gekennzeichnet durch die Verwendung in einer Kläranlage, wobei das in einen Vorfluter abfließende geklärte Abwasser im Turbinenbetrieb der Kreiselradmaschine genutzt wird, während die Pumpfunktion der Kreiselradmaschine im Sinne eines Hochwasser-Schöpfwerkes genutzt wird.

14. Aggregat nach Anspruch 1, gekennzeichnet durch die Verwendung in einer Anlage für die Be- oder Entwässerung.

15. Aggregat nach Anspruch 1, gekennzeichnet durch die Verwendung in einer Anlage der Prozeßtechnik.
